(19) Europäisches Patentamt
European Patent Office
Office européen des brevets

(11) **EP 1 877 187 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **06776240.1**

(22) Anmeldetag: **15.07.2006**

(51) Int Cl.:
*B01J 38/06* (2006.01)     *B01J 23/92* (2006.01)
*B01D 53/94* (2006.01)     *F01N 3/20* (2006.01)
*B01J 35/00* (2006.01)

(86) Internationale Anmeldenummer:
**PCT/EP2006/006941**

(87) Internationale Veröffentlichungsnummer:
**WO 2007/009679 (25.01.2007 Gazette 2007/04)**

(54) **VERFAHREN ZUR REAKTIVIERUNG THERMISCH GEALTERTER STICKOXID-SPEICHERKATALYSATOREN**

METHOD FOR THE REACTIVATION OF THERMALLY AGED NITROGEN OXIDE STORAGE CATALYTIC CONVERTERS

PROCEDE POUR REACTIVER DES CATALYSEURS DE STOCKAGE D'OXYDES D'AZOTE VIEILLIS THERMIQUEMENT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.07.2005 DE 102005034344**

(43) Veröffentlichungstag der Anmeldung:
**16.01.2008 Patentblatt 2008/03**

(73) Patentinhaber: **Umicore AG & Co. KG**
**63457 Hanau-Wolfgang (DE)**

(72) Erfinder:
• **WITTROCK, Meike**
**63599 Biebergemuend (DE)**
• **GOEBEL, Ulrich**
**65795 Hattersheim (DE)**
• **KREUZER, Thomas**
**61184 Karben (DE)**
• **CASAPU, Maria, Cristina**
**79761 Waldshut-Tiengen (DE)**
• **GRUNWALDT, Jan-Dierk**
**DK-2800 Kgs. Lyngby (DK)**
• **MACIEJEWSKI, Marek**
**CH-8049 Zuerich (CH)**
• **BAIKER, Alfons**
**CH-8152 Opfikon (CH)**

(56) Entgegenhaltungen:
EP-A- 1 386 656          EP-A1- 0 982 066
GB-A- 2 409 656

• CASAPU MARIA ET AL: "Formation and stability of barium aluminate and cerate in NOx storage-reduction catalysts" APPL. CATAL. B ENVIRON.; APPLIED CATALYSIS B: ENVIRONMENTAL MAR 31 2006, Bd. 63, Nr. 3-4, 31. März 2006 (2006-03-31), Seiten 232-242, XP002412079

**Beschreibung**

Die Erfindung betrifft ein Verfahren zur Reaktivierung thermisch gealterter Stickoxid-Speicherkatalysatoren, welche Stickoxide speichernde Verbindungen auf einem Ceroxid enthaltendem Trägermaterial aufweisen.

Stickoxid-Speicherkatalysatoren werden zur Entfernung der im mageren Abgas von sogenannten Magermotoren enthaltenen Stickoxide verwendet. Dabei beruht die Reinigungswirkung darauf, daß in einer mageren Betriebsphase des Motors die Stickoxide vom Speichermaterial des Speicherkatalysators in Form von Nitraten gespeichert werden und in einer darauffolgenden fetten Betriebsphase des Motors die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Zu den Magermotoren werden im Rahmen dieser Erfindung sowohl Dieselmotoren als auch Benzinmotoren gezählt, die während ihrer überwiegenden Betriebsdauer mit einem mageren Luft/Kraftstoff-Gemisch betrieben werden. Die im Abgas dieser Motoren enthaltenen Stickoxide bestehen überwiegend aus Stickstoffmonoxid.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem inerten Wabenkörper aus Keramik oder Metall, einem sogenannten Tragkörper, aufgebracht ist. Das Katalysatormaterial enthält ein Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle, insbesondere aber Strontiumoxid und Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Geeignete Trägermaterialien für die Speicherkomponenten sind temperaturstabile Metalloxide mit hoher Oberfläche von mehr als 10 $m^2/g$, die eine hochdisperse Abscheidung der Speicherkomponenten ermöglichen. Die vorliegende Erfindung befaßt sich insbesondere mit Speichermaterialien, die Trägermaterialien auf der Basis von Ceroxid aufweisen. Hierzu gehören dotiertes Ceroxid und besonders die Mischoxide des Cers mit Zirkon.

Als katalytisch aktive Komponenten werden die Edelmetalle der Platingruppe verwendet, die in der Regel getrennt von den Speicherkomponenten auf einem separaten Trägermaterial abgeschieden werden. Als Trägermaterial für die Platingruppenmetalle wird überwiegend aktives, hochoberflächiges Aluminiumoxid eingesetzt.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann. Mit zunehmender Einlagerung der Stickoxide ins Speichermaterial nimmt die Speicherkapazität des Materials ab und muß daher von Zeit zu Zeit regeneriert werden. Hierzu wird der Motor für kurze Zeit mit fetten Luft/Kraftstoff-Gemischen betrieben. Unter den reduzierenden Bedingungen im fetten Abgas werden die gebildeten Nitrate zu Stickoxiden NOx zersetzt und unter Verwendung von Kohlenmonoxid, Wasserstoff und Kohlenwasserstoffen als Reduktionsmittel zu Stickstoff unter Bildung von Wasser und Kohlendioxid reduziert.

Speicherkatalysatoren werden im Betrieb zeitweise mit hohen Abgastemperaturen belastet, was zu einer thermischen Schädigung der Katalysatoren führen kann. Es können zwei wesentliche Alterungseffekte unterschieden werden:

- Die katalytisch aktiven Edelmetallkomponenten sind auf den oxidischen Materialien des Speicherkatalysators in hochdisperser Form mit mittleren Partikelgrößen zwischen etwa 2 und 15 nm aufgebracht. Aufgrund der feinen Verteilung besitzen die Edelmetallpartikel eine hohe Oberfläche für die Wechselwirkung mit den Bestandteilen des Abgases. Besonders im mageren Abgas von Magermotoren wird mit steigender Abgastemperatur eine irreversible Vergrößerung der Edelmetallkristallite beobachtet, die mit einer irreversiblen Verminderung der katalytischen Aktivität einhergeht.

- Die Speicherkomponenten unterliegen ebenfalls einer Sinterung durch hohe Temperaturen, wodurch sich ihre katalytisch aktive Oberfläche vermindert. Außerdem wurde beobachtet, daß die auf Trägermaterialien abgeschiedenen Speicherkomponenten bei hohen Temperaturen mit den Trägermaterialien Verbindungen eingehen, die eine geringere Speicherfähigkeit für Stickoxide aufweisen (siehe SAE Technical Paper 970746 und die EP 0982066 A1). Wird zum Beispiel Bariumoxid auf einem Ceroxid enthaltenden Trägermaterial als Speicherkomponente eingesetzt, so besteht die Gefahr der Bildung von Bariumcerat ($BaCeO_3$).

Die Sinterung der Edelmetallpartikel ist ein irreversibler Prozeß. Eine Wiederherstellung der ursprünglichen Kristallitgrößen durch eine spezielle Behandlung scheint nicht möglich zu sein. Dagegen besteht die Hoffnung, daß die Verbindungsbildung zwischen Speicherkomponenten und Trägermaterialien durch eine geeignete Behandlung wieder rückgängig gemacht werden kann. Damit könnte die katalytische Aktivität eines Stickoxid-Speicherkatalysators nach einer thermischen Schädigung zumindest teilweise wiederhergestellt werden.

Es ist daher Aufgabe der vorliegenden Erfindung ein Verfahren zur Reaktivierung von Stickoxid-Speicherkatalysatoren anzugeben, deren Speicherfähigkeit durch Verbindungsbildung der Speicherkomponenten mit den Trägermaterialien infolge hoher Temperaturen vermindert ist.

Diese Aufgabe wird durch ein Verfahren zur Reaktivierung eines thermisch gealterten Stickoxid-Speicherkatalysators gelöst, wobei der Speicherkatalysator basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält. Das Verfahren ist **dadurch gekennzeichnet, daß** die Verbindungen des Strontiums und/oder Bariums mit dem Trägermaterial durch Behandeln mit einer 0,05 bis 5 Vol.-% Stickstoffdioxid, 5 bis 15 Vol.-% Wasserdampf und 0 bis 20 Vol.-% Kohlendioxid enthaltenden Gasmischung bei Temperaturen zwischen 300 und 500 °C zersetzt werden.

Die Aufgabe wird außerdem gelöst durch ein Verfahren zur Reaktivierung eines thermisch gealterten Stickoxid-Speicherkatalysators, welcher basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält, welches dadurch gekennzeichnet ist, daß der Stickoxid-Speicherkatalysator Bestandteil einer Abgasanlage an einem Fahrzeug mit Magermotor ist und der Katalysator zur Reaktivierung während einer anstehenden Wartung ausgebaut wird. Der ausgebaute Katalysator wird für die Dauer von 0,1 bis 5 Stunden bei Temperaturen zwischen 300 und 500°C mit einer Gasmischung behandelt, die 1 bis 35 Vol.-% Stickoxide enthaltend Stickstoffdioxid, 5 bis 50 Vol.-% Sauerstoff, 5 bis 30 Vol.-% Wasserdampf, 0 bis 20 Vol.-% Kohlendioxid und gegebenenfalls Rest Stickstoff enthält.

Die Erfindung beruht auf Untersuchungen zur Bildung von Bariumcerat ($BaCeO_3$) bei der thermischen Alterung von Speichermaterialien, die basische Verbindungen des Bariums auf einem Ceroxid enthaltenden Trägermaterial aufweisen, sowie auf Untersuchungen zur Zersetzung des Reaktionsproduktes. Ausgangspunkt detaillierterer Untersuchungen war die Beobachtung, daß das gebildete Bariumcerat sich teilweise wieder zu Bariumoxid und Ceroxid zersetzt, wenn das Material mit salpetersaurer, wässriger Lösung imprägniert wird. Das hierbei intermediär gebildete Bariumoxid reagiert unmittelbar zu Bariumnitrat weiter. Vermutlich läuft die Zersetzung nach der folgenden Reaktionsgleichung (1) ab:

$$BaCeO_3 + 2\ HNO_3\ (aq) \rightarrow Ba(NO_3)_2 + CeO_2 + H_2O \qquad (1)$$

Die Zersetzung läuft bei einer Temperatur von 80 °C relativ langsam ab.

Weiterhin zeigte sich, daß Bariumcerat bei Behandeln mit einer Stickstoffdioxid und Wasserdampf enthaltenden Gasmischung bei Temperaturen zwischen 300 und 500 °C und ausreichender Reaktionszeit nahezu vollständig zersetzt wird. Die höchsten Reaktionsgeschwindigkeiten wurden bei 400 °C beobachtet. Die Zersetzung läuft in diesem Fall wahrscheinlich in zwei Stufen gemäß den folgenden Reaktionsgleichungen (2) ab:

$$BaCeO_3 + H_2O(g) \rightarrow \left. \begin{array}{l} BaO + CeO_2 \\ \downarrow NO_2(g) \\ Ba(NO_3)_2 \end{array} \right\} \qquad (2)$$

Darüber hinaus konnte eine Zersetzung von Bariumcerat bei Behandeln mit einer Kohlenstoffdioxid enthaltenden Gasmischung im Temperaturbereich von 400 bis 980 °C unter Bildung von Bariumcarbonat ($BaCO_3$) und Ceroxid nachgewiesen werden. Oberhalb von 980 °C entsteht wieder Bariumcerat aus der Reaktion von intermediär gebildetem Bariumoxid und Ceroxid.

Die erfindungsgemäße Zersetzung des Bariumcerats und damit die Reaktivierung des Speichermaterials durch Behandeln mit einer Gasmischung aus Stickstoffdioxid, Wasserdampf und gegebenenfalls Kohlendioxid kann dazu verwendet werden, um Stickoxid-Speicherkatalysatoren, die Bestandteil einer Abgasreinigungsanlage an einem Fahrzeug mit Magermotor und Abgasrückführung sind, im Falle einer thermischen Schädigung des Speicherkatalysators direkt am Fahrzeug zu reaktivieren. Die reaktivierende Gasmischung wird hierbei durch das Abgas des Motors selbst gebildet. Die Betriebsbedingungen des Motors müssen dabei so gewählt werden, daß das Abgas einen möglichst hohen Anteil an Stickoxiden und genug Wärme enthält, um vor dem Stickoxid-Speicherkatalysator eine Temperatur im Bereich zwischen 300 und 500 °C zu gewährleisten.

Bevorzugt enthält das zur Reaktivierung verwendete Abgas 0,05 bis 5 Vol.-% Stickstoffdioxid, 5 bis 20 Vol.-% Sauerstoff, 5 bis 15 Vol.-% Wasserdampf, 0 bis 20 Vol.-% Kohlendioxid und Rest im wesentlichen Stickstoff. Die Behandlungsdauer für eine vollständige Zersetzung des Bariumcerats beträgt je nach Abgaszusammensetzung und Temperatur 0,5 bis 5 Stunden.

Fahrzeuge mit Magermotor sind typischerweise mit einer Abgasrückführung ausgerüstet. In diesem Fall kann durch Abschalten der Abgasrückführung der Stickoxidgehalt des Abgases deutlich erhöht werden. Als weitere Maßnahme zur Erhöhung des Stickstoffdioxid-Gehaltes im Abgas kann der Zündzeitpunkt des Motors so verändert werden, daß die Temperatur im Brennraum ansteigt. Selbstverständlich können diese beiden voneinander unabhängig durchführbaren Maßnahmen auch kombiniert werden, um zu höheren Stickstoffdioxid-Gehalten im Abgas zu kommen.

Die Reaktivierung ist auch bei Abgasreinigungsanlagen anwendbar, die zwei Abgasreinigungskonverter enthalten, nämlich einen motornahen katalytischen Konverter und einen Unterbodenkonverter. Dabei können beide Konverter Stickoxid-Speicherkatalysatoren enthalten. Alternativ kann der motornahe Konverter einen Dieseloxidationskatalysator oder eine Dreiweg-Katalysator und der Unterbodenkonverter einen Stickoxid-Speicherkatalysator aufweisen. Im Falle eines Dieseloxidationskatalysators im motornahen Konverter führt das zu einer für die Reaktivierung des Unterbodenkatalysators vorteilhaften Erhöhung der Stickstoffdioxidkonzentration im Abgas. Enthält der motornahe Konverter einen Dreiweg-Katalysator, so wirkt er im Magerbetrieb ebenfalls als Oxidationskatalysator und erhöht die Stickstoffdioxidkonzentration. Aber auch im stöchiometrischen Betrieb ist eine Reaktivierung des Unterbodenkatalysators in diesem Fall noch möglich, da der motornahe Katalysator gewöhnlich ein kleines Volumen besitzt und damit insbesondere bei hohen Stickoxidkonzentrationen im Abgas nur einen Teil der Stickoxide umsetzen und somit der Reaktivierung entziehen kann.

Neben der Durchführung des Verfahrens zur Reaktivierung von Stickoxid-Speicherkatalysatoren direkt am Fahrzeug, kann die Reaktivierung auch durch Ausbau des Katalysators im Rahmen einer routinemäßigen Wartung in einer eigens dazu ausgelegten Reaktivierungsapparatur vorgenommen werden. In dieser Apparatur kann der Katalysator mit einer für die Reaktivierung optimierten Gasmischung behandelt werden. Bevorzugt enthält diese Gasmischung 1 bis 35 Vol.-% Stickoxide, 5 bis 50 Vol.-% Sauerstoff, 5 bis 30 Vol.-% Wasserdampf, 0 bis 20 Vol.-% Kohlendioxid und gegebenenfalls Rest Stickstoff. Die Reaktivierung wird dabei ebenfalls bei einer Temperatur zwischen 300 und 500 °C für die Dauer von 0,1 bis 5 Stunden vorgenommen.

Die Erfindung wird im folgenden an Hand einiger Beispiele und Figuren näher erläutert. Es zeigen:

**Figur 1:** Gehalt von Bariumcerat in einem Pt/Ba/CeO$_2$-Speicherkatalysator in Abhängigkeit von Temperatur und Dauer der Temperaturbehandlung. Die Quantifizierung erfolgte durch pulverdiffraktometrische Phasenanalyse und Auswertung der Reflexe bei 2Θ = 40,9 ° und 2Θ = 41,1 °.

**Figur 2:** Zersetzung von Bariumcerat durch Behandeln mit Wasser in Gegenwart von Stickstoffdioxid bei verschiedenen Temperaturen in Abhängigkeit von der Behandlungsdauer; berechnet aus XRD-Messungen

**Figur 3:** Reaktivierung eines thermisch geschädigten Speicherkatalysators (System I aus Beispiel 3) im Unterbodenbereich eines Fahrzeugs.

**Figur 4:** Reaktivierung eines Katalysatorsystems aus einem motornahen Speicherkatalysator und einem im Unterbodenbereich des Fahrzeugs angeordneten zweiten Speicherkatalysator (System II aus Beispiel 3).

**Figur 5:** Verbrennungsmotor mit einer Abgasreinigungsanlage, welche einen motornahen Abgasreinigungskonverter und einen im Unterbodenbereich des Fahrzeugs angeordneten zweiten Abgasreinigungskonverter enthält

**Beispiel 1:**

Zur Untersuchung der Bildung von Bariumcerat in einem Pt/Ba/CeO$_2$-Speicherkatalysator wurde Ceroxid mit einer spezifischen BET-Oberfläche von 95 m$^2$/g zunächst mit einer wässrigen Bariumacetat-Lösung, dann mit einer wäßrigen Lösung von Dinitrodiamin-Platin imprägniert. Nach jedem Imprägnierschritt wurde das Pulver über Nacht bei 80 °C getrocknet und dann für die Dauer von 5 Stunden bei 500 °C kalziniert.

Die so erhaltenen Pulverproben wurden zur Untersuchung der Bildung von Bariumcerat in einem vorgeheizten Ofen bei Temperaturen von 800, 850, 900, 950 und 1000 °C für unterschiedliche Zeitdauern zwischen 2 und 10 Stunden kalziniert. Nach den Temperaturbehandlungen wurde der Gehalt der Proben an Bariumcerat mit Röntgenbeugung ermittelt. Dazu wurden die Proben einer Phasenanalyse in einem Röntgenpulverdiffraktometer der Firma Siemens D5000 unter Verwendung von Cu K$_\alpha$-Strahlung unterzogen. Der untersuchte Beugungswinkelbereich 2Θ betrug 15 bis 65 ° mit einer Schrittweite von 0,01° und einer Zählzeit von 2 s pro Schritt. In den erhaltenen Diffraktogrammen wurden die Peakflächen der für $BaCeO_3$ charakteristischen Reflexe bei $2\Theta = 40,9$ ° und $2\Theta = 41,1$ ° quantitativ ausgewertet. Die Standardisierung der Intensitäten erfolgte durch den Abgleich mit einer Kupferreferenz mittels der Intensität des Cu(111) Reflexes bei $2\Theta = 43,17$ °.

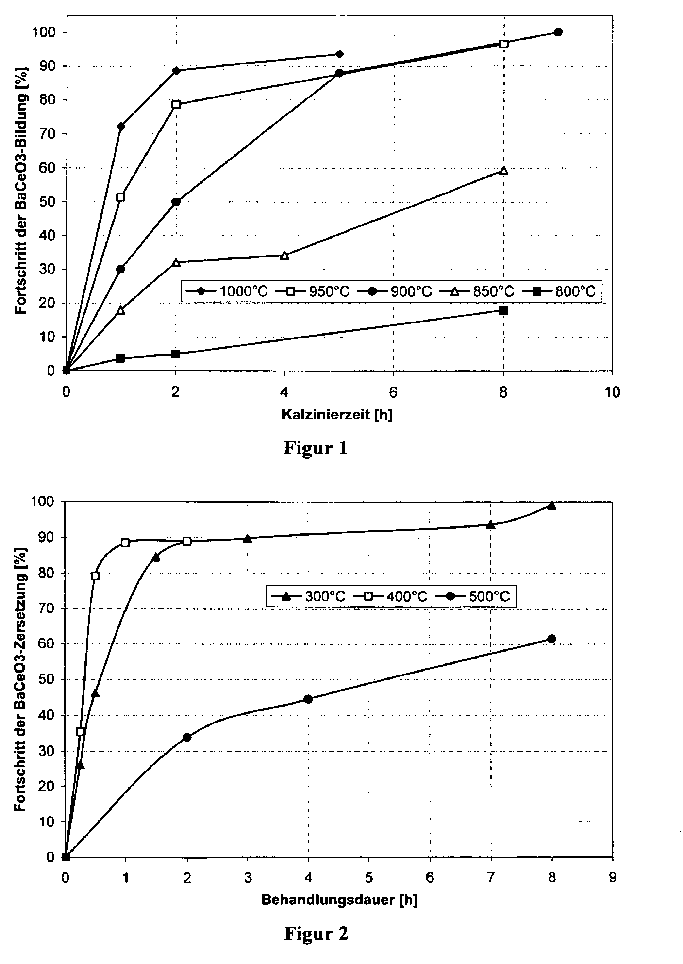

Die Ergebnisse dieser Messungen sind in Figur 1 dargestellt. Die Bildung von Bariumcerat ist bereits nach einstündiger Kalzination bei einer Temperatur von 800 °C nachweisbar. Nach einer 8-stündigen Temperaturbehandlung bei 850 °C ist bereits mehr als die Hälfte des Materials zu Bariumcerat umgesetzt. Ein quantitativer Umsatz kann nach neunstündiger Kalzination bei 900 °C beobachtet werden.

**Beispiel 2:**

Zur Untersuchung der Zersetzung von Bariumcerat durch Behandeln mit einer Wasserdampf und Stickstoffdioxid enthaltenden Gasmischung wurde zunächst Bariumcerat durch Kalzinieren von $Pt/Ba/CeO_2$-Speicherkatalysatoren, deren Herstellung in Beispiel 1 beschrieben ist, für die Dauer von 10 Stunden bei 1000 °C gebildet.

Das erhaltene Pulver wurde dann in einem Festbettreaktor einem kontinuierlichen Gasstrom aus einer 1:1-Mischung von 1 Vol.-% $NO_2$ in synthetischer Luft und zirka 3 Vol.% $H_2O$ in Helium (bei Raumtemperatur gesättigt) ausgesetzt. Die Behandlung wurde bei verschiedenen Temperaturen durchgeführt, wobei als Starttemperatur 300 °C gewählt wurden, da diese Temperatur etwa der Temperatur eines Speicherkatalysators entspricht, bei welcher er seine optimale Aktivität erreicht. Vor Durchleiten der beschriebenen Reaktionsgasmischung durch das Katalysatorfestbett wurde der Reaktor zunächst für 30 Minuten unter Helium auf die Zieltemperatur aufgeheizt. Dann erfolgte die Umsetzung unter Reaktionsgas für verschiedene Zeitdauern zwischen 15 Minuten und 8 Stunden, sowie eine Abkühlung des Festbettes auf Raumtemperatur unter Helium.

Die so erhaltenen Pulverproben wurden nach der in Beispiel 1 beschriebenen Methode röntgenpulverdiffraktometrisch charakterisiert und der Fortschritt der Bariumcerat-Zersetzung festgestellt. Die Ergebnisse zeigt Figur 2. Die Messungen belegen, daß sich Bariumcerat relativ leicht in einer Stickstoffdioxid und Wasserdampf enthaltenden Atmosphäre bei einer Temperatur von 300 °C zersetzen läßt. Nach einer Reaktionsdauer von 7 Stunden ist nahezu das gesamte Bariumcerat zu Bariumnitrat umgesetzt.

Die Zersetzung des Bariumcerats in einer nur mit Wasserdampf gesättigten HeliumAtmosphäre ist bei 300 °C ebenfalls zu beobachten, geht aber langsamer vonstatten als in Anwesenheit von Stickstoffdioxid. Jedoch werden auch in diesem Fall schon beträchtliche Anteile des Bariumcerats umgesetzt. Gemäß dem in Reaktionsgleichung (2) angegebenen Schema wird das Hydrolysegleichgewicht des Bariumcerats durch die Gegenwart von Stickstoffdioxid auf die Produktseite verschoben, da intermediär gebildetes Bariumoxid sehr rasch mit $NO_2$ zu unter diesen Bedingungen stabilem Bariumnitrat reagieren kann.

Das Aktivitätsfenster von Stickoxid-Speicherkatalysatoren (NOx-Fenster) für die Umsetzung von Stickstoffdioxid zu Stickstoff zeigt im Temperaturbereich zwischen 250 und 400 °C maximale Umsetzungsraten. Die Untersuchungen zur Zersetzung von Bariumcerat wurden daher auch bei Temperaturen von 400 und 500 °C vorgenommen. Die Zersetzung bei 400 °C ist schneller als bei 300 °C. Bei 500 °C nimmt die Zersetzungsgeschwindigkeit allerdings deutlich ab. Eine Erklärung hierfür ist die Tatsache, daß Bariumnitrat bei höheren Temperaturen instabil ist und daher nicht gebildet werden kann. Seine Zersetzung beginnt unter nicht-isothermen Bedingungen etwa bei 400 °C. Daher wird die Reaktion des Bariumcerats mit Wasser bei 500 °C durch die Anwesenheit von Stickstoffdioxid weniger beeinflußt als bei tieferen Temperaturen.

**Beispiel 3:**

Die Beispiele 1 und 2 zeigen, daß durch thermische Belastung in ihrer Aktivität geschädigte Stickoxid-Speicherkatalysatoren durch Behandeln in einer geeigneten Gasmischung zumindest teilweise reaktiviert werden können. Besonders vorteilhaft wäre es, wenn hierzu das Abgas des Motors verwendet werden könnte, welches ebenfalls Stickstoffdioxid, Wasser und Kohlendioxid enthält.

Zur Überprüfung dieser Möglichkeit stand ein Motorprüfstand mit Magermotor (4 Zylinder/Kompressor-Motor, 1,8 1 Hubraum, max. Leistung 125 kW bei 5500 U/min, Drehmoment 236 Nm bei 4000 U/min) zur Verfügung, dessen Abgasreinigungsanlage mit zwei Konvertergehäusen ausgerüstet war, von denen sich eines in motornaher Position befand und das andere im Unterbodenbereich des Fahrzeugs angeordnet war.

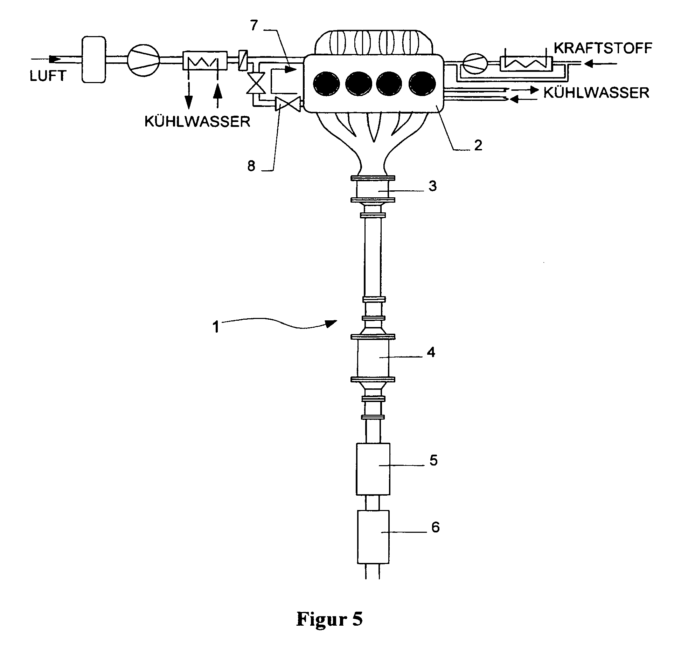

Der Aufbau dieser Abgasreinigungsanlage ist in Figur 5 dargestellt. Bezugsziffer (1) bezeichnet die Abgasreinigungsanlage des Motors (2). Die Abgasreinigungsanlage enthält den motornahen Abgasreinigungskonverter (3) und einen Abgasreinigungskonverter (4) im Unterbodenbereich. Die Bezugsziffern (5) und (6) bezeichnen einen Vorschalldämpfer und einen Hauptschalldämpfer. Der Motor (2) ist mit einer Luft- und einer Kraftstoffversorgung ausgerüstet und weist eine Abgasrückführung (7) auf, die mit dem Ventil (8) zu- oder abgeschaltet werden kann.

Es wurden zwei verschiedene Katalysatorsysteme untersucht:

| Katalysator | System I | System II |
|---|---|---|
| motornah | Unbeschichteter Katalysatorkörper | Katalysator gemäß der EP1317953 A1 |
| Unterboden | Katalysator gemäß der EP 1317953 A1 | Katalysator gemäß der EP1317953 A1 |

Die hier verwendeten Katalysatoren gemäß der EP 1317953 A1 enthalten entsprechend dem in der genannten Anmeldung aufgeführten Anspruch 10 ein Speichermaterial, das eine basische Bariumverbindung als Speicherkomponente, aufgebracht auf einem hochoberflächigen Trägermaterial auf der Basis von Ceroxid enthält.

Im motornahen Konverter wurde ein Katalysator mit einem Durchmesser von 11,84 cm und einer Länge von 7,62 cm eingesetzt, was 0,84 l Katalysatorvolumen entspricht. Im Unterbodenbereich kamen zwei Katalysatoren mit einem Gesamtvolumen von 2 l zum Einsatz, wobei jeder Katalysator 1 l Volumen aufwies. Das Abgassystem I war nur mit einem Stickoxid-Speicherkatalysator im Unterbodenbereich ausgerüstet. Zur Simulation des Druckverlustes wurde in das motornahe Konvertergehäuse ein unbeschichteter Katalysatorkörper eingesetzt. Das Abgassystem II war in beiden Konvertergehäusen mit Stickoxid-Speicherkatalysatoren bestückt.

Die katalytische Beschichtung aller verwendeten Katalysatoren bei diesen Untersuchungen entsprach einer Katalysatorformulierung aus der EP 1317953 A1, auf die hier bezüglich der Einzelheiten der Formulierung verwiesen wird. Bei dem Speichermaterial dieses Katalysators handelt es sich um Bariumoxid auf einem Cer/Zirkon-Mischoxid (90 Gew.-% Ceroxid und 10 Gew.-% Zirkonoxid).

Vor dem Einsetzen in die Konvertergehäuse wurden die Katalysatoren im Ofen bei 950 °C für die Dauer von 12 Stunden kalziniert, um eine gezielte thermische Alterung der Katalysatoren hervorzurufen.

Die thermisch gealterten Katalysatorsysteme wurden dann in der beschriebenen Konfiguration am Motorprüfstand durch Bestimmung ihres Magerlaufverhaltens in Abhängigkeit von der Temperatur vor Unterbodenkatalysator charakterisiert. Zur Charakterisierung wurde der Motor bei verschiedenen Lastpunkten im Schichtbetrieb betrieben, so daß je nach Bestückung des motornahen Konverters vor Unterbodenkatalysator Temperaturen zwischen 200 und 360 °C (System I) bzw. 250 und 450 °C resultierten. Über einen nach Unterbodenkatalysator angeordneten NOx-Sensor wurde die Stickoxid-Emission bestimmt. Bei Erreichen einer kritischen Stickoxid-Konzentrationsschwelle nach Unterbodenkatalysator wurde die Magerphase abgebrochen und durch Umschalten auf fette Betriebsbedingungen die Stickoxid-Regeneration eingeleitet. Das Ende der Regenerationsphase wurde ebenfalls mit Hilfe des NOx-Sensors detektiert, wenn dieser einen Regenerationsmitteldurchbruch anzeigte. Die in diesem Verfahren ermittelten Magerlaufzeiten wurden zur Charakterisierung des Stickoxid-Speicherverhaltens in Abhängigkeit von der Temperatur vor Unterbodenkatalysator aufgetragen ("NOx-Fenster").

Nach Charakterisierung des Magerlaufverhaltens der Systeme in thermisch gealtertem Zustand wurde eine Reaktivierung des jeweiligen Katalysatorsystems vorgenommen, indem am heißesten, im "NOx-Fenster" gewählten Betriebspunkt die Abgasrückführung für eine gewisse Zeit abgestellt wurde. Für System I wurde eine Reaktivierungszeit von zwei Stunden gewählt, für System II eine Reaktivierungszeit von einer Stunde. Nach Ende der Reaktivierungszeit wurde die Abgasrückführung wieder eingeschaltet und die Charakterisierung des Magerlaufverhaltens entsprechend der bereits beschriebenen Routine wiederholt.

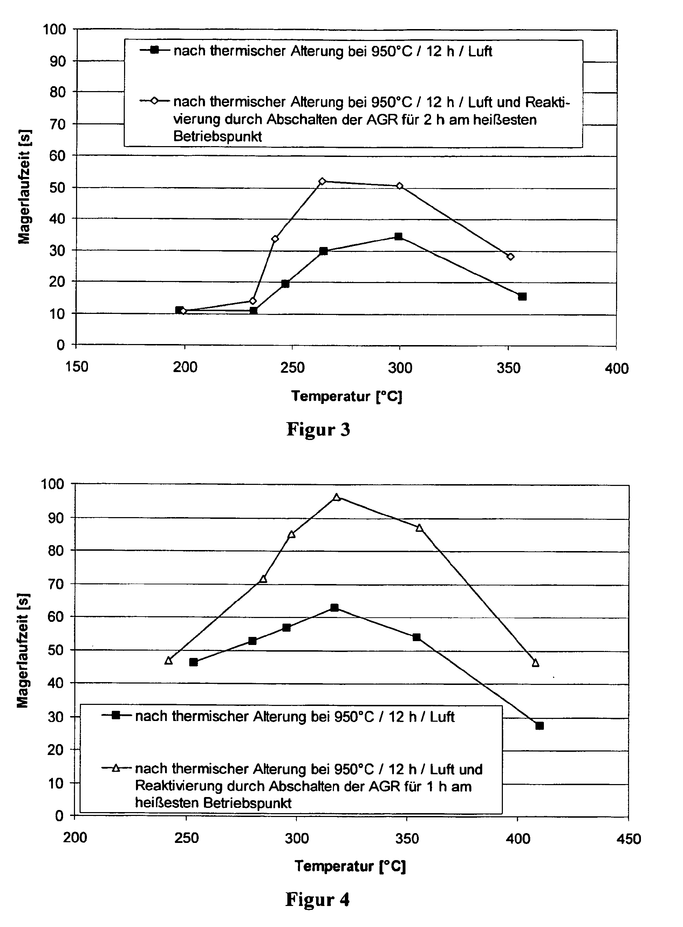

Die Ergebnisse für System I sind in Figur 3 dargestellt, wobei die Kurve mit den durch die ausgefüllten Quadrate gekennzeichneten Meßpunkten das "NOx-Fenster" in thermisch gealtertem Zustand darstellt, die Kurve mit den nicht ausgefüllten Rauten das "NOx-Fenster" nach der Reaktivierung zeigt.

Figur 4 zeigt die erhaltenen Ergebnisse für System II , wobei auch hier die Kurve mit den durch die ausgefüllten Quadrate gekennzeichneten Meßpunkten das "NOx-Fenster" in thermisch gealtertem Zustand darstellt, die Kurve mit den nicht ausgefüllten Dreiecken das "NOx-Fenster" nach Reaktivierung zeigt.

In beiden Experimenten konnte gezeigt werden, daß eine Erhöhung der Stickoxid-Konzentration im Abgas eines Magermotors, die durch das Abschalten der Abgasrückführung vorgenommen wird, zu einer teilweisen Wiederherstellung der Aktivität von thermisch gealterten Stickoxid-Speicherkatalysatoren führt, wenn die Stickoxid-Speicherkatalysatoren als Stickoxid-Speichermaterial eine basische Bariumverbindung auf einem Trägermaterial auf Basis von Ceroxid enthalten.

**Patentansprüche**

1. Verfahren zur Reaktivierung eines thermisch gealterten Stickoxid-Speicherkatalysators, welcher basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält,

**dadurch gekennzeichnet,**
**daß** die Verbindungen des Strontiums und/oder Bariums mit dem Trägermaterial durch Behandeln mit einer 0,05 bis 5 Vol.-% Stickstoffdioxid, 5 bis 15 Vol.-% Wasserdampf und 0 bis 20 Vol.-% Kohlendioxid enthaltenden Gasmischung bei Temperaturen zwischen 300 und 500 °C zersetzt werden.

2. Verfahren nach Anspruch 1,
**dadurch gekennzeichnet,**
**daß** der Stickoxid-Speicherkatalysator Bestandteil einer Abgasreinigungsanlage an einem Fahrzeug mit Magermotor und Abgasrückführung ist, und die Gasmischung zur Reaktivierung durch das Abgas des Verbrennungsmotors gebildet und die Reaktivierung in einem Betriebspunkt des Magermotors mit Abgastemperaturen zwischen 300 und 500 °C vorgenommen wird.

3. Verfahren nach Anspruch 2,
**dadurch gekennzeichnet,**
**daß** zur Erhöhung der Stickoxid-Konzentration im Abgas die Abgasrückführung abgeschaltet und/oder der Zündzeitpunkt des Motors so verändert wird, daß die Verbrennungstemperatur in den Zylindern des Motors ansteigt.

4. Verfahren nach Anspruch 3,
**dadurch gekennzeichnet,**
**daß** das zur Reaktivierung verwendete Abgas weiterhin 5 bis 20 Vol.-% Sauerstoff und im Rest im wesentlichen Stickstoff enthält und die Behandlung für die Dauer von 0,5 bis 5 Stunden vorgenommen wird.

5. Verfahren nach Anspruch 4,
**dadurch gekennzeichnet,**
**daß** die Abgasreinigungsanlage einen motornahen katalytischen Konverter und einen Unterbodenkonverter enthält.

6. Verfahren nach Anspruch 5,
**dadurch gekennzeichnet,**
**daß** beide Konverter einen Stickoxid-Speicherkatalysator enthalten.

7. Verfahren nach Anspruch 5,
**dadurch gekennzeichnet,**
**daß** der motornahe Konverter einen Dieseloxidationskatalysator oder einen Dreiweg-Katalysator und der Unterbodenkonverter einen Stickoxid-Speicherkatalysator enthalten.

8. Verfahren zur Reaktivierung eines thermisch gealterten Stickoxid-Speicherkatalysators, welcher basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält,
**dadurch gekennzeichnet,**
**daß** der Stickoxid-Speicherkatalysator Bestandteil einer Abgasreinigungsanlage an einem Fahrzeug mit Magermotor ist und der Katalysator zur Reaktivierung während einer anstehenden Wartung ausgebaut und für die Dauer von 0,1 bis 5 Stunden bei Temperaturen zwischen 300 und 500°C mit der Gasmischung behandelt wird, die 1 bis 35 Vol.-% Stickoxide enthaltend Stickstoffdioxid, 5 bis 50 Vol.-% Sauerstoff, 5 bis 30 Vol.-% Wasserdampf, 0 bis 20 Vol.-% Kohlendioxid und gegebenenfalls Rest Stickstoff enthält.

**Claims**

1. Method of reactivating a thermally aged nitrogen oxide storage catalyst which comprises basic strontium or barium compounds or strontium and barium compounds on a support material comprising cerium oxide and additionally contains strontium and/or barium compounds with the support material formed as a result of the thermal aging,
**characterized in that**
the compounds of strontium and/or barium with the support material are decomposed by treatment with a gas mixture comprising from 0.05 to 5% by volume of nitrogen dioxide, from 5 to 15% by volume of water vapor and from 0 to 20% by volume of carbon dioxide at temperatures in the range from 300 to 500°C.

2. Method according to Claim 1,

**characterized in that**

the nitrogen oxide storage catalyst is part of an exhaust gas purification unit on a vehicle having a lean-burn engine and exhaust gas recirculation and the gas mixture used for reactivation is formed by the exhaust gas of the internal combustion engine and the reactivation is carried out at an operating point of the lean-burn engine at which the exhaust gas temperatures are from 300 to 500°C.

3. Method according to Claim 2,
   **characterized in that**
   the increase in the nitrogen oxide concentration in the exhaust gas is brought about by switching off the exhaust gas recirculation and/or altering the timing of the ignition of the engine so as to increase the combustion temperature in the cylinders of the engine.

4. Method according to Claim 3,
   **characterized in that**
   the exhaust gas used for reactivation further comprises from 5 to 20% by volume of oxygen and essentially nitrogen as balance and the treatment is carried out for 0.5 to 5 hours.

5. Method according to Claim 4,
   **characterized in that**
   the exhaust gas purification unit comprises a catalytic converter close to the engine and an underfloor converter.

6. Method according to Claim 5,
   **characterized in that**
   both converters contain a nitrogen oxide storage catalyst.

7. Method according to Claim 5,
   **characterized in that**
   the converter close to the engine contains a diesel oxidation catalyst or a three-way catalyst and the underfloor converter contains a nitrogen oxide storage catalyst.

8. Method of reactivating a thermally aged nitrogen oxide storage catalyst which comprises basic strontium or barium compounds or strontium and barium compounds on a support material comprising cerium oxide and additionally contains strontium and/or barium compounds with the support material formed as a result of the thermal aging,
   **characterized in that**
   the nitrogen oxide storage catalyst is part of an exhaust gas purification unit on a vehicle having a lean-burn engine and the catalyst is, for the purpose of reactivation, removed from the exhaust gas purification unit during a scheduled service and is treated with the gas mixture for 0.1 to 5 hours at temperatures in the range from 300 to 500°C, the gas mixture comprising from 1 to 35% by volume of nitrogen oxides comprising nitrogen dioxide, from 5 to 50% by volume of oxygen, from 5 to 30% by volume of water vapor, from 0 to 20% by volume of carbon dioxide and, if appropriate, nitrogen as balance.

**Revendications**

1. Procédé pour la réactivation d'un catalyseur d'accumulation d'oxyde d'azote vieilli thermiquement, qui présente des composés basiques de strontium ou de baryum ou des composés basiques de strontium et de baryum sur un matériau support contenant de l'oxyde de cérium et qui contient en outre des composés à base de strontium et/ou de baryum avec le matériau support formés par le vieillissement thermique, **caractérisé en ce que** les composés du strontium et/ou du baryum avec le matériau support sont décomposés par traitement avec un mélange gazeux contenant 0,05 à 5% en volume de dioxyde d'azote, 5 à 15% en volume de vapeur d'eau et 0 à 20% en volume de dioxyde de carbone à des températures entre 300 et 500°C.

2. Procédé selon la revendication 1, **caractérisé en ce que** le catalyseur d'accumulation d'oxyde d'azote est un constituant d'une installation de purification des gaz d'échappement sur un véhicule avec un moteur à mélange pauvre et un recyclage des gaz d'échappement et le mélange gazeux pour la réactivation est formé par le gaz d'échappement du moteur à combustion et la réactivation est réalisée à un point de fonctionnement du moteur à mélange pauvre à des températures du gaz d'échappement entre 300 et 500°C.

**3.** Procédé selon la revendication 2, **caractérisé en ce que,** pour augmenter la concentration en oxyde d'azote dans le gaz d'échappement, le recyclage de gaz d'échappement est arrêté et/ou le point d'allumage du moteur est modifié de manière telle que la température de combustion dans les cylindres du moteur augmente.

**4.** Procédé selon la revendication 3, **caractérisé en ce que** le gaz d'échappement utilisé pour la réactivation contient en outre 5 à 20% en volume d'oxygène et pour le reste essentiellement de l'azote et le traitement est réalisé pendant une durée de 0,5 à 5 heures.

**5.** Procédé selon la revendication 4, **caractérisé en ce que** l'installation de purification du gaz d'échappement contient un convertisseur catalytique proche du moteur et un convertisseur dans le soubassement.

**6.** Procédé selon la revendication 5, **caractérisé en ce que** les deux convertisseurs contiennent un catalyseur d'accumulation d'oxyde d'azote.

**7.** Procédé selon la revendication 5, **caractérisé en ce que** le convertisseur proche du moteur contient un catalyseur d'oxydation de diesel ou un catalyseur à trois voies et le convertisseur dans le soubassement contient un catalyseur d'accumulateur d'oxyde d'azote.

**8.** Procédé pour la réactivation d'un catalyseur d'accumulation d'oxyde d'azote vieilli thermiquement, qui présente des composés basiques de strontium ou de baryum ou des composés basiques de strontium et de baryum sur un matériau support contenant de l'oxyde de cérium et qui contient en outre des composés à base de strontium et/ou de baryum avec le matériau support formés par le vieillissement thermique, **caractérisé en ce que** le catalyseur d'accumulation d'oxyde d'azote est un constituant d'une installation de purification de gaz d'échappement sur un véhicule avec un moteur à mélange pauvre et le catalyseur est démonté, pour la réactivation, pendant un entretien en cours et traité pendant un laps de temps de 0,1 à 5 heures à des températures entre 300 et 500°C avec le mélange gazeux, qui contient 1 à 35% en volume d'oxydes d'azote contenant du dioxyde d'azote, 5 à 50% en volume d'oxygène, 5 à 30% en volume de vapeur d'eau, 0 à 20% en volume de dioxyde de carbone et le cas échéant pour le reste de l'azote.

Figur 1

Figur 2

**Figur 3**

**Figur 4**

**Figur 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982066 A1

- EP 1317953 A1